**Europäisches Patentamt**

**European Patent Office**

**Office européen des brevets**

(11) Veröffentlichungsnummer : **0 369 455 B1**

## (12) EUROPÄISCHE PATENTSCHRIFT

(45) Veröffentlichungstag der Patentschrift :
15.04.92 Patentblatt 92/16

(51) Int. Cl.$^5$ : **C02F 3/12**

(21) Anmeldenummer : **89121254.0**

(22) Anmeldetag : **17.11.89**

(54) Verfahren und Vorrichtung zur biologischen Reinigung von Abwasser.

(30) Priorität : **17.11.88 DE 3838846**

(43) Veröffentlichungstag der Anmeldung :
**23.05.90 Patentblatt 90/21**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI LU NL SE**

(56) Entgegenhaltungen :
**EP-A- 0 302 708**
**GB-A- 2 063 695**
**US-A- 4 695 378**

(73) Patentinhaber : **OTTO OEKO-TECH GMBH &
CO. KG
Konrad-Adenauer-Strasse 25
W-5000 Köln 50 (DE)**

(72) Erfinder : **Die Erfinder haben auf ihre Nennung
verzichtet**

(74) Vertreter : **Fitzner, Ulrich, Dr.
Am Eichförstchen 2a
W-4030 Ratingen 4 (DE)**

EP 0 369 455 B1

## Beschreibung

Die Erfindung bezieht sich auf ein Verfahren zur biologischen Reinigung von Abwasser, mit welchem gelöste Schadstoffe enthaltendes Abwasser und Luft gemeinsam über mindestens eine Düse unter Druck in einen als Behälter ausgebildeten Reaktor eingebracht und in dem Reaktor als Zweistoffgemisch weitergeführt werden sowie auf eine Vorrichtung zur Durchführung des Verfahrens.

Bei der biologischen Reinigung von Abwasser werden in demselben gelöste Schadstoffe durch Bakterien bzw. Mikroorganismen abgebaut. Um deren Wirksamkeit zu erhöhen bzw. ihre Vermehrung zu beschleunigen, wird dem Abwasser Sauerstoff zugeführt. Das kann durch Zufuhr von Luft oder auch von reinem Sauerstoff erfolgen. Vielfach werden dem Abwasser auch noch Nährstoffe zugeführt. Das geschieht bei bekannten Kläranlagen in sogenannten Belebungsbecken. Der dabei biologisch erzeugte Schlamm wird in einem nachgeschalteten Sedimentationsbecken vom gereinigten Abwasser getrennt. Die für dieses Verfahren eingesetzten Becken haben einen großen Platzbedarf. Trotzdem ist die biologische Abbauleistung nicht befriedigend und die offene Bauweise führt häufig zu sehr störender Geruchsbelästigung für die Umgebung.

Es sind daher Verfahren entwickelt worden, bei denen statt des Belebungsbeckens Hochleistungsreaktoren mit wesentlich vermindertem Platzbedarf und erhöhter biologischer Abbauleistung eingesetzt werden. Ein solches, eingangs beschriebenes Verfahren geht aus der DE-Z "Chem.Ind. XXXVII/Januar 1985", Seiten 43 bis 46 hervor. Bei diesem Verfahren wird ein Kompaktreaktor eingesetzt, der aus einem zylindrischen Behälter besteht, in dem ein an beiden Enden offenes zylindrisches Einsteckrohr angeordnet ist. Ein aus Abwasser und Luft bestehendes Gemisch wird über eine Zweistoffdüse in das Einsteckrohr eingebracht. Die über die Zweistoffdüse zugeführte Luft wird infolge großer Scherkräfte im Bereich der Zweistoffdüse zu kleinsten Blasen dispergiert, so daß eine große Austauschfläche entsteht und der Eintrag an Sauerstoff günstig beeinflußt wird. Mit diesem bekannten Verfahren kann die biologische Abbauleistung gegenüber herkömmlichen Verfahren mit Belebungsbecken erheblich erhöht werden. Da der hohe Stoffaustausch aber im wesentlichen im Bereich der Zweistoffdüse stattfindet und die Turbulenz im Einsteckrohr durch das Abwasser relativ schnell gedämpft wird, ist auch dieses Verfahren in vielen Fällen unbefriedigend.

Der Erfindung liegt die Aufgabe zugrunde, ein Verfahren zum Reinigen von Abwasser anzugeben, mit dem der Stoffaustausch beim Einbringen von Sauerstoff in das Abwasser wesentlich erhöht wird.

Diese Aufgabe wird mit einem Verfahren der eingangs geschilderten Art gemäß der Erfindung dadurch gelöst,

– daß das Abwasser und die Luft dem Reaktor über mindestens zwei voneinander getrennte Düsen zugeführt werden,

– daß die von den Düsen ausgehenden Ströme des Zweistoffgemischs im Reaktor so geführt werden, daß sie in demselben in einer Prallzone aufeinander prallen und

– daß das Abwasser nach Entmischung vom Reaktor aus in ein Absetzgefäß geleitet wird.

Durch das Scherfeld des Abwassers in unmittelbaren Bereich hinter den Öffnungen der Düsen wird die Luft beim Austritt aus den Düsen in sehr kleine Blasen zerteilt. Gleichzeitig saugen die aus den Düsen austretenden Abwasserstrahlen vom Inneren des Reaktors Abwasser bzw. ein Luft/Abwasser-Gemisch an. Es bilden sich dadurch hinter den Düsen homogene Zweistoffströme aus. Die Zweistoffströme werden beispielsweise durch Krümmer so umgelenkt, daß sie innerhalb des Reaktors in der Prallzone zusammenprallen, in welcher die Luftblasen weiter zerteilt werden. Die kinetische Energie des strömenden Luft/Abwasser-Gemisches dissipiert dabei. Dadurch werden eine hohe Turbulenz und eine große Stoffaustauschfläche in der Prallzone sowie in den übrigen Teilen des Reaktors oberhalb und unterhalb der Prallzone erzeugt. Bei gleichem Energieeintrag wie bei dem bekannten Verfahren ist der so erzielte Stoffaustausch wesentlich höher. Mit diesem Verfahren wird also auf einfache Weise wesentlich mehr Sauerstoff in das Abwasser eingebracht als es bisher möglich war. Das Verfahren ermöglicht daher eine erheblich erhöhte biologische Abbauleistung.

Vorteilhafte Ausgestaltungen der Erfindung, die insbesondere auch eine Vorrichtung zur Durchführung des Verfahrens betreffen, gehen aus den Unteransprüchen hervor.

Verfahren und Vorrichtung nach der Erfindung werden an Hand der Zeichnungen in Ausführungsbeispielen erläutert.

Es zeigen:

Fig. 1 in schematischer Darstellung eine Vorrichtung zur Durchführung des Verfahrens nach der Erfindung.

Fig. 2 und 3 zwei gegenüber Fig. 1 ergänzte Vorrichtungen mit unterschiedlicher Anordnung der Düsen.

Fig. 4 und 5 zwei gegenüber Fig. 2 und 3 abgewandelte Vorrichtungen.

Fig. 6 und 7 zwei weitere Ausgestaltungen der Vorrichtung.

In einem Reaktor 1, der vorzugsweise als langgestreckter Zylinder ausgebildet ist, sollen Luft LT und gelöste Schadstoffe enthaltendes Abwasser AW miteinander gemischt werden. Dabei soll eine möglichst große Menge von in der Luft LT enthaltenem Sauerstoff in das Abwasser AW eingebracht werden. Der Reaktor 1 mündet mit seinem in Arbeitsposition oberen Ende in einen Kasten 2. Im Kasten 2 sind zwei Düsen 3 und 4 angeordnet, denen einerseits das Abwasser AW und andererseits die Luft LT zugeführt werden. Die Düsen 3 und 4 sind dabei so angeordnet, daß die aus ihnen austretenden Strahlen in Leitrohre 5 und 6 gelangen, die ihrerseits an zwei einander diametral gegenüber liegenden Stellen in den Reaktor 1 einmünden.

Die Leitrohre 5 und 6 können - wie aus den Zeichnungen ersichtlich - im wesentlichen parallel zum Reaktor 1 verlaufen und nach Durchlaufen einer Krümmung von vorzugsweise 90° an den Reaktor 1 angeschlossen sein. Die beiden in den Leitrohren 5 und 6 getrennt geführten Zweistoffgemische aus Abwasser AW und Luft LT treffen im Reaktor 1 in einer gestrichelt umrandeten Prallzone PZ aufeinander. Das Abwasser kann entsprechend dem Pfeil 7 nach oben steigen, von wo es nach Entmischung über den Kasten 2 in ein Absetzgefäß 8 gelangt. Die überschüssige Luft (Rest des Sauerstoffs und Luftstickstoff) kann gemäß dem gestrichelten Pfeil 9 aus dem Kasten 2 über einen Filter 10 als Abgas entweichen. Auch aus dem Absetzgefäß 8 austretendes Abgas kann über den Filter 10 geführt werden. Im Kasten 2 ist ein Wehr 11 angebracht, durch das die für den getrennten Ablauf bzw. Abzug von Abwasser und Abgas erforderliche Entmischung erreicht wird. Die Höhe des Wehrs 11 ist veränderbar.

In den Zeichnungen sind jeweils zwei Düsen 3 und 4 dargestellt. Es können aber auch mehr als zwei jeweils voneinander getrennte Düsen eingesetzt werden. Sie sind vorzugsweise als Zweistoffdüsen aus zwei konzentrischen Rohren ausgeführt. Bezüglich Geometrie und Abmessungen sind die Düsen 3 und 4 vorzugsweise identisch ausgebildet, so daß dem Reaktor 1 zwei oder mehr gleichmäßige Ströme des Zweistoffgemischs zugeführt werden.

Die Anordnung der Leitrohre 5 und 6 mit im wesentlichen parallelem Verlauf zum Reaktor 1 ist nicht zwingend. Sie könnten auch schräg zum Reaktor 1 hin verlaufen. Die Leitrohre 5 und 6 müssen auch nicht so in den Reaktor 1 einmünden, daß die austretenden Ströme in der Prallzone PZ frontal aufeinander treffen. Die Ströme können vielmehr auch unter einem von 180° abweichenden Winkel aufeinander prallen. In bevorzugter Ausführungsform prallen die Ströme jedoch frontal, also unter einem Winkel von 180°, aufeinander.

Wenn mehr als zwei Düsen 3 und 4 verwendet werden, dann werden die Einmündungsstellen der entsprechenden Leitrohre 5 und 6 zweckmäßig gleichmäßig am Umfang des Reaktors 1 versetzt angeordnet. Bei drei Düsen liegt zwischen den Einmündungsstellen also beispielsweise jeweils ein Winkel von 120°. Das gilt auch dann, wenn die Düsen 3 und 4 ohne Leitrohre 5 und 6 direkt in den Reaktor 1 einmünden.

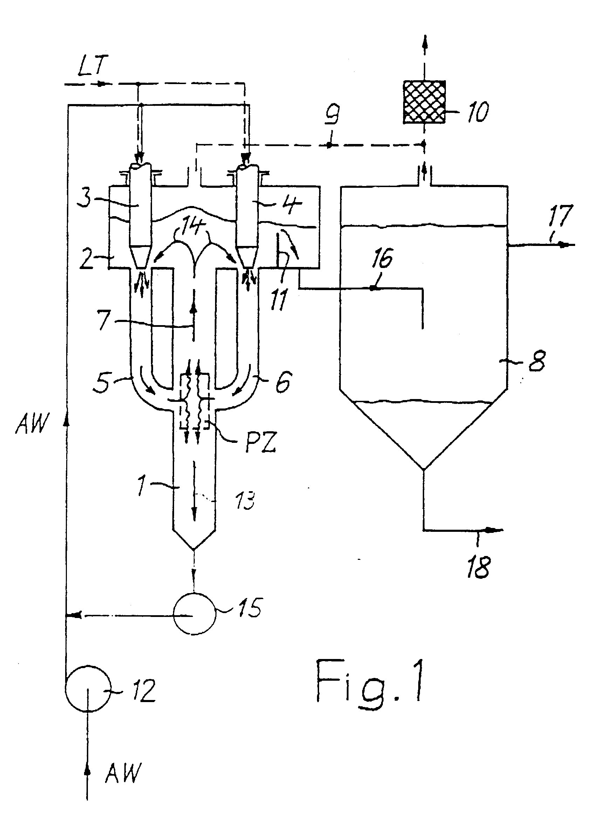

Verfahren und Vorrichtung nach Fig. 1 arbeiten beispielsweise wie folgt:

Dem Reaktor 1 werden über die Düsen 3 und 4 Abwasser AW und Luft LT getrennt zugeführt. Das mit gelösten Schadstoffen und Mikroorganismen beladene Abwasser AW wird dazu mittels einer Pumpe 12 gefördert. Infolge des Scherfeldes des Abwassers AW an den Austrittsöffnungen der Düsen 3 und 4 wird die Luft LT dispergiert. Die entstandenen Gasblasen werden vom Abwasser AW mitgenommen und das so entstandene Zweistoffgemisch prallt in zwei Strömen in der Prallzone PZ aufeinander. Die Gasblasen werden dadurch weiter dispergiert, so daß ein erhöhter Stoffaustausch stattfindet. Von der Prallzone PZ ausgehend führen zwei Zweistoffströmungen entsprechend den Pfeilen 7 und 13 innerhalb des Reaktors 1 in entgegengesetzter Richtung. Dadurch wird erreicht, daß ein großer Teil der Gasblasen in der Prallzone PZ in der Schwebe bleibt und ständig weiter dispergiert wird. Das führt zu einer weiteren Erhöhung des Stoffaustausches. Die Prallzone PZ wird aus diesem Grunde in bevorzugter Ausführungsform möglichst zentral, also etwa in der Mitte, im Reaktor 1 erzeugt.

Zur weiteren Verbesserung des Stoffaustausches kann das Zweistoffgemisch innerhalb des Reaktors 1 auch in einem internen Kreislauf geführt werden, der durch die Pfeile 14 angedeutet sein soll. Zu diesem Zweck kann das Abwasser nach Entmischung auch in Richtung des Pfeiles 13 aus dem Reaktor 1 entnommen und mittels einer Pumpe 15 wieder den Düsen 3 und 4 zugeführt werden, und zwar gemeinsam mit dem von der Pumpe 12 geförderten Abwasser AW.

Das nach oben in Richtung des Pfeiles 7 aus dem Reaktor 1 austretende Abwasser gelangt in den Kasten 2. Es wird von dort nach Entmischung durch das Wehr 11 in Richtung des Pfeiles 16 in das Absetzgefäß 8 geleitet, in welchem sich der Mikroorganismen enthaltende Bioschlamm absetzt und vom gereinigten Abwasser trennt. Das Abwasser kann in Richtung des Pfeiles 17 dem Vorfluter aufgegeben werden. Der Bioschlamm kann als Überschußschlamm in Richtung des Pfeiles 18 entnommen und weiterer Verarbeitung zugeführt werden.

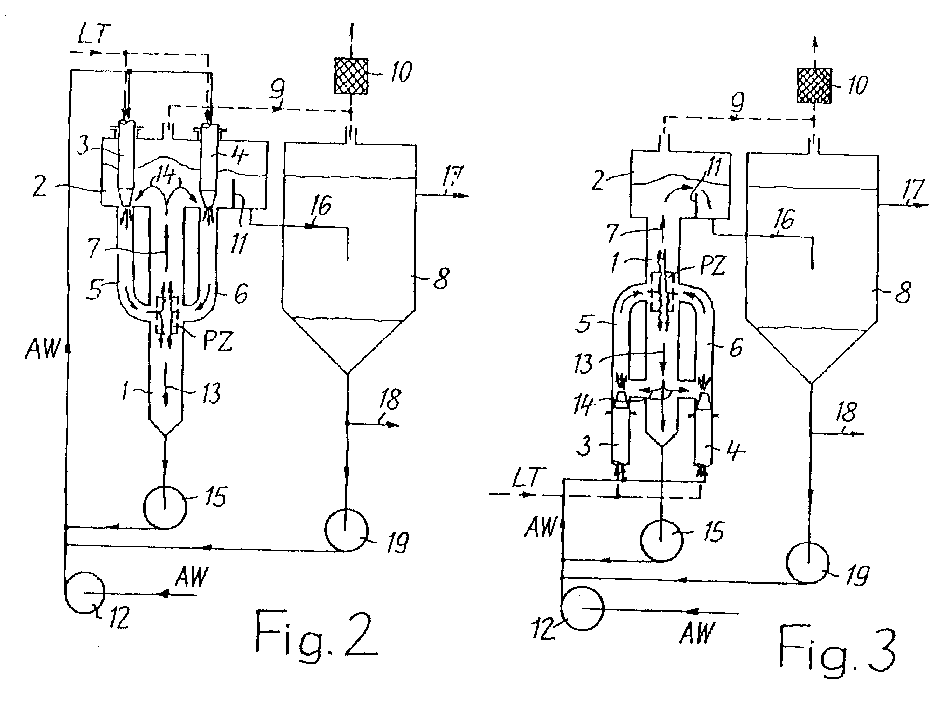

Die Düsen 3 und 4 sind bei den Ausführungsformen der Vorrichtung nach den Fig. 1 und 2 im oberen Bereich des Reaktors 1 angeordnet. Sie können gemäß Fig. 3 auch im unteren Bereich des Reaktors 1 angebracht sein. Die Wirkungsweise der Vorrichtung wird dadurch nicht verändert.

In dem sich im Absetzgefäß 8 absetzenden Bioschlamm sind die für die Reinigung des Abwassers benötigten Mikroorganismen enthalten. Es ist daher besonders zweckmäßig, wenn ein Teil des Bioschlamms zusammen mit dem Abwasser AW wieder in den Reaktor 1 geführt wird. Eine entsprechende vollständige Vorrichtung ist aus den Fig. 2 und 3 ersichtlich:

Das zu reinigende, durch die Pumpe 12 geförderte Abwasser AW und mittels einer Pumpe 19 aus dem Absetzgefäß 8 geförderter Bioschlamm werden mit dem in den Reaktor 1 zurückzuführenden Abwasser

3

(Pumpe 15) vermischt und mit sauerstoffhaltiger Luft LT über die Düsen 3 und 4 in den Reaktor 1 geführt. Die aus den Düsen 3 und 4 austretenden Abwassrströme mit dem Bioschlamm und den gleichmäßig verteilten Gasblasen werden - wie schon für Fig. 1 beschrieben - durch die Leitrohre 5 und 6 geführt und durch deren Krümmungen umgelenkt. Sie prallen schließlich innerhalb des Reaktors 1 zusammen. In der Prallzone PZ findet wieder ein hoher Stoffaustausch statt, einerseits zwischen dem Abwasser AW und der Luft LT und andererseits zwischen dem Abwasser AW und den Mikroorganismen.

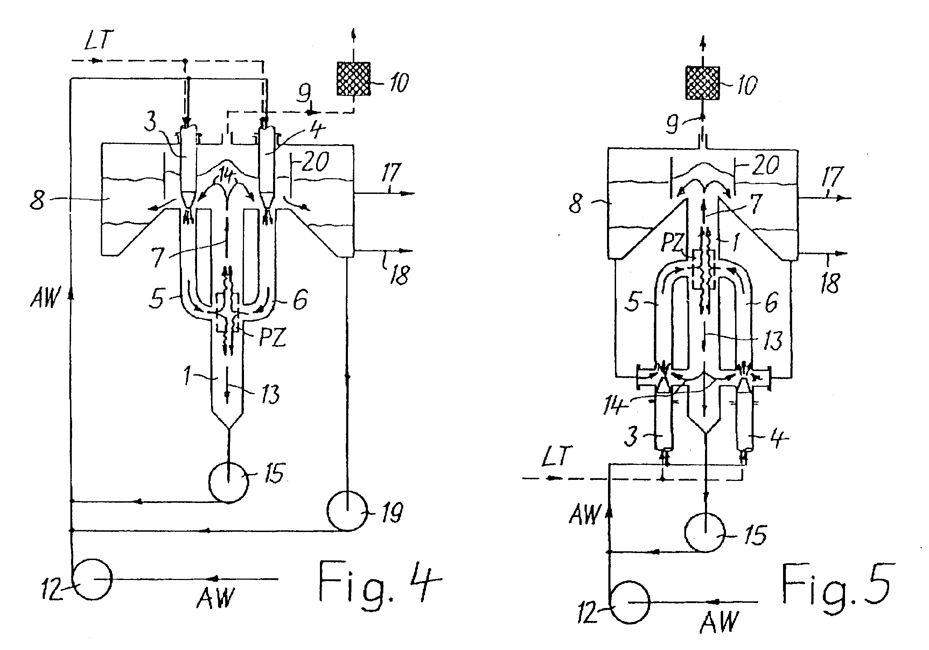

Die Vorrichtungen nach Fig. 4 und 5 unterscheiden sich von denen der Fig. 2 und 3 dadurch, daß der Reaktor 1 mit dem Absetzgefäß 8 integriert ist, welches an Stelle des Kastens 2 am in Arbeitsposition oberen Ende des Reaktors 1 auf denselben aufgesetzt ist. Die Trennung des Abwassers im Reaktor 1 von dem Abwasser im Absetzgefäß 8 erfolgt durch eine umlaufende, vorzugsweise zylindrische, Trennwand 20. In Fig. 4 ist die Begasung des Abwassers von oben und in Fig. 5 von unten dargestellt. Da die Düsen 3 und 4 bei der Begasung von unten den vom Absetzgefäß 8 in den Reaktor 1 zurückzuführenden Schlamm ansaugen können, kann sich bei dieser Vorrichtung der Einsatz der Pumpe 19 zur Rückführung des Bioschlamms erübrigen.

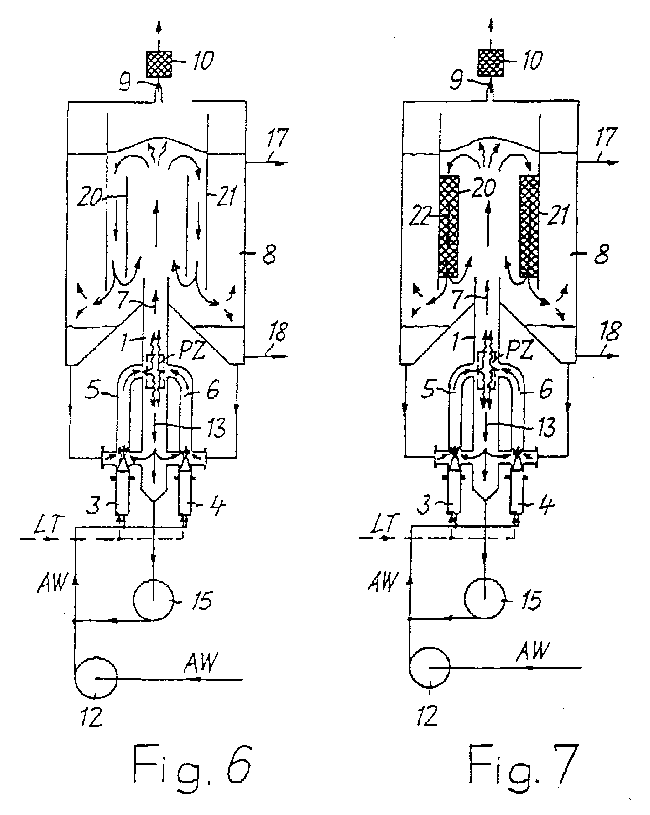

Der Reaktor 1 zeichnet sich durch eine sehr hohe Stoffaustauschleistung aus. Dies bedeutet, daß nur ein kleines Reaktorvolumen und eine kleine mittlere Verweilzeit benötigt werden, um eine bestimmte Sauerstoffkonzentration im Abwasser zu erreichen. Der Raumbedarf für den durch die Mikroorganismen zu erzielenden Abbau der im Abwasser gelösten Schadstoffe ist höher als der für die intensive Begasung des Abwassers AW im Reaktor 1. Die Trennung des Reaktorraums in zwei Zonen kann daher zu einer Verringerung des Energiebedarfs führen. Fig. 6 zeigt eine solche Vorrichtung für den Fall, daß die Begasung des Reaktors 1 von unten erfolgt.

Die erste Zone entspricht dem Reaktor 1, in den eine hohe volumenbezogene Leistung eingebracht wird. In dieser Zone wird die Sauerstoffkonzentration im Abwasser AW stark erhöht ( » 2 mg/ml) und es werden von dem im Abwasser befindlichen Bioschlamm sehr kleine Bakterienagglomerate mit großer volumenbezogener Austauschfläche erzeugt. Die zweite Zone beinhaltet das Volumen des Abwassers innerhalb der Trennwand 20 und oberhalb des Reaktors 1. Vorzugsweise kann in diesem Raum ein zylinderisches Umlaufrohr 21 konzentrisch zu der Trennwand 20 eingebaut werden. Wegen des Impulsstroms der aus dem Reaktor 1 austretenden Zweiphasenströmung und der Auftriebskraft der aufsteigenden Gasblasen findet in dieser Zone ein Abwasserumlauf statt.

Ein Sauerstoffaustausch zwischen den Gasblasen und dem Abwasser findet in der zweiten Zone ebenfalls statt. Dieser Stoffaustausch geschieht jedoch, verglichen mit der ersten Zone, mit verminderter Intensität. Im Ringspalt zwischen dem Umlaufrohr 21 und der Trennwand 20 strömt das Abwasser abwärts. Am unteren Ende des Ringspalts wird ein Teil des abwärtsgerichteten Abwasserstroms zurück in das Umlaufrohr 21 umgelenkt. Der übrige Teil des Abwasserstroms gelangt in das Absetzgefäß 8. Der Bioschlamm wird vom Absetzgefäß 8 mittels der Düsen 3 und 4 (oder ggf. mittels einer Pumpe) angesaugt und teilweise in den Reaktor 1 zurückgeführt.

Die zweite Zone kann auch noch mit einem Festbett 22 in Form einer Schüttung oder einer geordneten Packung versehen werden. Durch das Festbett 22 werden die im Abwasser enthaltenen Mikroorganismen immobilisiert und ihre Konzentration wird in dieser Zone erhöht. Damit der Abwasserumlauf in der zweiten Zone durch das Festbett 22 nicht zu stark gedämpft wird, wird dasselbe vorzugsweise nur im Ringspalt zwischen Trennwand 20 und Umlaufrohr 21 angeordnet, so wie es aus Fig. 7 zu ersehen ist.

Durch die Erhöhung der Konzentration an Mikroorganismen in der zweiten Zone mittels des Festbetts 22 kann sich der Bedarf an aus dem Absetzgefäß 8 zurückzuführendem Bioschlamm vollständig erübrigen.

Die Düsen 3 und 4 sind bei den Vorrichtungen nach den Fig. 6 und 7 unten am Reaktor 1 angebracht. Sie können aber auch oben angeordnet werden, so wie es im Prinzip aus den Fig. 1, 2 und 4 hervorgeht.

## Patentansprüche

1. Verfahren zur biologischen Reinigung von Abwasser, mit welchem gelöste Schadstoffe enthaltendes Abwasser und Luft gemeinsam über mindestens eine Düse unter Druck in einen als Behälter ausgebildeten Reaktor eingebracht und in dem Reaktor als Zweistoffgemisch weitergeführt werden, dadurch gekennzeichnet,
   – daß das Abwasser (AW) und die Luft (LT) dem Reaktor (1) über mindestens zwei voneinander getrennte Düsen (3,4) zugeführt werden,
   – daß die von den Düsen (3,4) ausgehenden Ströme des Zweistoffgemischs im Reaktor (1) so geführt werden, daß sie in demselben in einer Prallzone (PZ) aufeinander prallen und
   – daß das Abwasser (AW) nach Entmischung vom Reaktor (1) aus in ein Absetzgefäß (8) geleitet wird.

2. Verfahren nach Anspruch 1, dadurch gekennzeichnet, daß ein Teil des sich im Absetzgefäß (8) absetzenden Schlamms über die Düsen (3,4) in den Reaktor (1) zurückgeführt wird.

3. Verfahren nach Anspruch 1 oder 2, dadurch gekennzeichnet, daß der Durchsatz von Abwasser (AW) und Luft (LT) auf die Düsen (3,4) gleichmäßig aufgeteilt wird.

4. Verfahren nach einem der Ansprüche 1 bis 3, dadurch gekennzeichnet, daß als Düsen (3,4) Zweistoffdüsen verwendet werden.

5. Verfahren nach einem der Ansprüche 1 bis 4, dadurch gekennzeichnet, daß die aus den Düsen (3,4) austretenden Ströme so geführt werden, daß sie im Reaktor (1) frontal aufeinander prallen.

6. Verfahren nach einem der Ansprüche 1 bis 5, dadurch gekennzeichnet, daß die Ströme dem Reaktor (1) über Leitrohre (5,6) zugeführt werden.

7. Verfahren nach einem der Ansprüche 1 bis 6, dadurch gekennzeichnet, daß das Zweistoffgemisch dem Reaktor (1) teilweise entnommen und demselben über die Düsen (3,4) erneut zugeführt wird.

8. Verfahren nach einem der Ansprüche 1 bis 7, dadurch gekennzeichnet, daß das Zweistoffgemisch im Reaktor (1) teilweise in einem internen Kreislauf geführt wird.

9. Verfahren nach einem der Ansprüche 1 bis 8, dadurch gekennzeichnet, daß Abwasser (AW) und Luft (LT) dem Reaktor (1) von oben zugeführt werden.

10. Verfahren nach einem der Ansprüche 1 bis 8, dadurch gekennzeichnet, daß Abwasser (AW) und Luft (LT) dem Reaktor (1) von unten zugeführt werden.

11. Vorrichtung zur Durchführung des Verfahrens nach einem der Ansprüche 1 bis 10, gekennzeichnet durch die Verwendung eines Reaktors (1), der einen in Gebrauchslage an seinem oberen Ende angeordneten Kasten (2), mindestens zwei Leitrohre (5,6), die etwa im mittleren Bereich des Reaktors (1) auf gleicher Höhe in demselben enden und mindestens zwei Düsen (3,4) aufweist, die auf den dem Reaktor (1) abgewandten Enden der Leitrohre (5,6) in dieselben hineinragen und eines mit dem Reaktor (1) verbundenen Absetzgefäßes (8).

12. Vorrichtung nach Anspruch 11, dadurch gekennzeichnet, daß in dem Kasten (2) mindestens ein in Gebrauchslage der Vorrichtung vertikal verlaufendes Wehr (11) angebracht ist.

13. Vorrichtung nach Anspruch 11 oder 12, dadurch gekennzeichnet, daß der Reaktor (1) so lang bemessen ist, daß in seinem unteren Bereich eine Entmischung von Abwasser (AW) und Luft (LT) stattfindet.

14. Vorrichtung nach einem der Ansprüche 11 bis 13, dadurch gekennzeichnet, daß Geometrie und Abmessungen der Düsen (3,4) identisch sind.

15. Vorrichtung nach einem der Ansprüche 11 bis 14, dadurch gekennzeichnet, daß Reaktor (1) und Absetzgefäß (8) zu einem Gerät zusammengefaßt sind.

16. Vorrichtung nach einem der Ansprüche 11 bis 15, dadurch gekennzeichnet, daß im Absetzgefäß (8) mindestens eine umlaufende Trennwand (20) zur Trennung von Zweistoffgemisch und gereinigtem Abwasser angebracht ist.

17. Vorrichtung nach einem der Ansprüche 11 bis 16, dadurch gekennzeichnet, daß das Absetzgefäß (8) im oberen Bereich des Reaktors (1) als Erweiterung desselben angeordnet ist und daß im Absetzgefäß (8) ein Umlaufrohr (21) zur Aufnahme von aus dem Reaktor (1) aufsteigendem Zweistoffgemisch angebracht ist.

18. Vorrichtung nach einem der Ansprüche 11 bis 17, dadurch gekennzeichnet, daß um das Umlaufrohr (21) herum ein Festbett (22) aus einer Schüttung oder einer geordneten Packung angebracht ist.

## Claims

1. A process for biologically purifying waste water, wherein waste water containing harmful substances dissolved therein and air are fed jointly under pressure to a reactor designed as a vessel by means of at least one nozzle and are passed as a mixture of two substances within said reactor, said process being characterized in that
   – the waste water (AW) and the air (LT) are fed to the reactor (1) by means of at least two nozzles (3, 4) separated from each other;
   – the streams of said mixture of two substances originating from said nozzles (3, 4) are conducted within the reactor (1) in such a manner that they impinge on each other in a baffle zone (PZ) in the reactor; and
   – the waste water (AW) is passed from the reactor (1) to a settling vessel (8) after separation.

2. A process according to claim 1, characterized in that a part of the sludge settling in the settling vessel (8) is re-cycled to the reactor (1) through the nozzles (3, 4).

3. A process according to claim 1 or claim 2, characterized in that the flow of waste water (AW) and air (LT) is evenly distributed to both nozzles (3, 4).

4. A process according to any of the claims 1 to 3, characterized in that two-component nozzles are used as nozzles (3, 4).

5. A process according to any of the claims 1 to 4, characterized in that the streams emerging from said nozzles (3, 4) are conducted such that they impinge each other in said reactor (1) frontally.

6. A process according to any of the claims 1 to 5, characterized in that the streams are fed to the reactor (1) through conducting pipes (5, 6).

7. A process according to any of the claims 1 to 6, characterized in that the mixture of two substances is partially removed from the reactor (1) and re-fed to the reactor through said nozzles (3, 4).

8. A process according to any of the claims 1 to 7, characterized in that the mixture of two substances is partially conducted within the reactor (1) in an internal cycle.

9. A process according to any of the claims 1 to 8, characterized in that waste water (AW) and air (LT) are fed to said reactor (1) from above.

10. A process according to any of the claims 1 to 8, characterized in that waste water (AW) and air (LT) are fed to said reactor (1) from below.

11. An apparatus performing the process according to any of the claims 1 to 10, characterized by the use of a reactor (1) having a chest (2) arranged - in the position of use - at the top end section of the reactor (1), at least two conducting pipes (5, 6) terminating approximately in the middle section of said reactor (1) at the same level, and at least two nozzles (3, 4) projecting into the conducting pipes (5, 6) at the ends thereof being opposite to the reactor (1), as well as a settling vessel (8) connected to the said reactor (1).

12. An apparatus according to claim 11, characterized in that there is arranged in said chest (2) at least one weir (11) extending - in the position of use of the apparatus - in vertical direction.

13. An apparatus according to claim 11 or claim 12, characterized in that said reactor has such a length that in its lower section a separation of waste water (AW) from air (LT) takes place.

14. An apparatus according to any of the claims 11 to 13, characterized in that said nozzles (3, 4) are identical with respect to their geometry and dimensions.

15. An apparatus according to any of the claims 11 to 14, characterized in that reactor (1) and settling vessel (8) are combined in one device.

16. An apparatus according to any of the claims 11 to 15, characterized in that at least one circular partition wall (20) is provided in said settling vessel (8) to separate said mixture of two substances from said purified waste water.

17. An apparatus according to any of the claims 11 to 16, characterized in that said settling vessel (8) is arranged in the upper section of said reactor (1) as an extension thereof, and that a circular pipe (21) is arranged in said settling vessel (8) to accomodate said mixture of two substances ascending from said reactor (1).

18. An apparatus according to any of the claims 11 to 17, characterized in that a fixed bed (22) consisting of a bulk material or an ordered packing of material is arranged round said circular pipe (21).


## Revendications

1. Procédé pour l'épuration biologique d'eaux résiduaires, suivant lequel des eaux résiduaires contenant des éléments polluants dissous, et de l'air sont introduits conjointement, par l'intermédiaire d'au moins une tuyère sous pression, dans un réacteur réalisé sous la forme d'un récipient, et sont transportées dans le réacteur sous la forme d'un mélange binaire, caractérisé par le fait que :
  – les eaux résiduaires (ER) et l'air (AR) sont amenés dans le réacteur (1) par l'intermédiaire d'au moins deux tuyères (3, 4) séparées l'une de l'autre ;
  – les courants du mélange binaire qui sortent des tuyères (3, 4) sont dirigés dans le réacteur (1) de sorte qu'ils se heurtent l'un contre l'autre dans ce dernier dans une zone de rebondissement (ZR) ; et
  – les eaux résiduaires (ER), après séparation du réacteur (1), sont acheminées dans un récipient de décantation (8).

2. Procédé selon la revendication 1, caractérisé par le fait qu'une partie de la boue qui se dépose dans le récipient de décantation (8) est ramenée, par l'intermédiaire des tuyères (3, 4), dans le réacteur (1).

3. Procédé selon l'une quelconque des revendications 1 et 2, caractérisé par le fait que le débit des eaux résiduaires (ER) et de l'air (AR) est réparti uniformément sur les tuyères (3, 4).

4. Procédé selon l'une quelconque des revendications 1 à 3, caractérisé par le fait qu'on utilise, comme tuyères (3, 4), des tuyères à deux substances.

5. Procédé selon l'une quelconque des revendications 1 à 4, caractérisé par le fait que les courants sortant des tuyères (3, 4) sont dirigés de telle sorte qu'ils se heurtent l'un contre l'autre frontalement dans le réacteur (1).

6. Procédé selon l'une quelconque des revendications 1 à 5, caractérisé par le fait que les courants sont amenés dans le réacteur (1) par l'intermédiaire de tubes de guidage (5, 6).

7. Procédé selon l'une quelconque des revendications 1 à 6, caractérisé par le fait que le mélange binaire est extrait partiellement du réacteur (1) et est amené à nouveau à celui-ci par l'intermédiaire des tuyères (3, 4).

8. Procédé selon l'une quelconque des revendications 1 à 7, caractérisé par le fait que le mélange binaire dans le réacteur (1) est dirigé en partie dans un circuit interne.

9. Procédé selon l'une quelconque des revendications 1 à 8, caractérisé par le fait que les eaux résiduaires (ER) et l'air (AR) sont amenés dans le réacteur (1) par le haut.

10. Procédé selon l'une quelconque des revendications 1 à 8, caractérisé par le fait que les eaux résiduaires (ER) et l'air (AR) sont amenés dans le réacteur (1) par le bas.

11. Dispositif pour la mise en oeuvre du procédé tel que défini à l'une quelconque des revendications 1 à 10, caractérisé par l'utilisation d'un réacteur (1), qui présente un caisson (2) disposé, en position d'utilisation, sur son extrémité supérieure, au moins deux tubes de guidage (5, 6), qui se terminent à peu près dans la zone moyenne du réacteur (1) à la même hauteur dans ce dernier, et au moins deux tuyères (3, 4), qui pénètrent sur les extrémités des tubes de guidage (5, 6) qui sont tournées à l'opposé du réacteur (1), dans ces derniers, et un récipient de décantation (8) relié au réacteur (1).

12. Dispositif selon la revendication 11, caractérisé par le fait que, dans le caisson (2), est mis en place au moins un déversoir (11) s'étendant verticalement en position d'utilisation du dispositif.

13. Dispositif selon l'une quelconque des revendications 11 et 12, caractérisé par le fait que le réacteur (1) est dimensionné pour être suffisamment long pour que, dans sa région inférieure, ait lieu une séparation des eaux résiduaires (ER) et de l'air (AR).

14. Dispositif selon l'une quelconque des revendications 11 à 13, caractérisé par le fait que la géométrie et les dimensions des tuyères (3, 4) sont identiques.

15. Dispositif selon l'une quelconque des revendications 11 à 14, caractérisé par le fait que le réacteur (1) et le récipient de décantation (8) sont regroupés en une unité.

16. Dispositif selon l'une quelconque des revendications 11 à 15, caractérisé par le fait que, dans le récipient de décantation (8), est mise en place au moins une paroi de séparation (20) périphérique pour séparer le mélange binaire et les eaux résiduaires épurées.

17. Dispositif selon l'une quelconque des revendications 11 à 16, caractérisé par le fait que le récipient de décantation (8) est disposé dans la zone supérieure du réacteur (1) sous la forme d'un élargissement de ce dernier, et que, dans le récipient de décantation (8), est mis en place un tube de circulation (21) pour recevoir le mélange binaire montant du réacteur (1).

18. Dispositif selon l'une quelconque des revendications 11 à 17, caractérisé par le fait qu'autour du tube de circulation (21), est mis en place un lit fixe (22) d'une matière en vrac ou d'un garnissage ordonné.

Fig.1

Fig. 2

Fig. 3

Fig. 5

Fig. 4

Fig. 6

Fig. 7